# EUROPÄISCHE PATENTANMELDUNG

(11) **EP 1 577 497 A1**
(43) Veröffentlichungstag der Anmeldung: **21.09.2005**
(21) Anmeldenummer: 04100816.0
(22) Anmeldetag: 01.03.2004
(51) Int. Cl.: F01D 5/18, F01D 5/08

(54) **Strömungsmaschinenschaufel mit interner Kühlung**

(71) Anmelder: Alstom Technology Ltd, 5400 Baden (CH)
(72) Erfinder: Fokine, Arkadi, 109444, Moskau (RU); Trifonov, Serguej, 109390, Moskau (RU); Trishkin, Alexandre, 140080, Lytkarino (RU); Vassiliev, Vladimir, 5300, Turgi (CH); Vinogradov, Dimitri, 1154047, Moskau (RU)

(57) **Zusammenfassung**

Eine gekühlte Strömungsmaschinenschaufel zeichnet sich dadurch aus, dass innerhalb des Schaufelblattes (2) wenigstens zwei Durchströmungskanäle (23, 24) angeordnet sind, welche unmittelbar mit einer Kühlmittelzuführung (11) verbunden sind. Ein erster Durchströmungskanal (23) verläuft im Schaufelblattinnern entlang der Schaufelblatt-Vorderkante (21). Ein zweiter Durchströmungskanal (24) verläuft im Schaufelblattinnern entlang der Schaufelblatt-Hinterkante (22). Damit werden die durch thermische Belastung besonders gefährdeten Schaufelblatt-Vorderund Hinterkanten mit frischem, nicht aufgeheiztem Kühlmittel gekühlt. Innerhalb des Schaufelblattes sind weitere Durchströmungskanäle (25, 26) angeordnet, welche mit bereits aufgeheiztem Kühlmittel aus dem ersten (23) oder zweiten (24) Durchströmungskanal angeströmt werden. Diese dienen zur Kühlung der geringer belasteten Mittelbereiche des Schaufelblattes. Wenigstens ein Teil, bevorzugt der gesamte Kühlmittelmassenstrom strömt über eine Kühlmittelabführung (31) ab, welche bevorzugt im Bereich des Schaufelkopfes (3) angeordnet ist.

## Beschreibung

### Technisches Gebiet

Die Erfindung betrifft eine Strömungsmaschinenschaufel gemäss dem Oberbegriff des Anspruchs 1. Sie betrifft weiterhin ein Verfahren zur Kühlung einer Strömungsmaschinenschaufel.

### Stand der Technik

In modernen Gasturbinen wird wenigstens ein Teil der Turbinenschaufeln gekühlt ausgeführt.

Zur Kühlung wird ein Kühlmittel, häufig Verdichterluft, durch Strömungskanäle innerhalb des Schaufelblattes geleitet. Dabei nimmt das Kühlmittel Wärme aus dem Schaufelmaterial auf; das Schaufelmaterial wird gekühlt und das Kühlmittel auf dem Strömungsweg erwärmt. Aus der fortwährenden Erwärmung des Kühlmittels resultiert aber eine im Verlaufe des Kühlmittelströmungsweges abnehmende Kühlwirkung. Umgekehrt wird die beste Kühlwirkung in dem Bereich erzielt, in dem das Kühlmittel zum Schaufelblatt zuströmt.

Es haben sich nunmehr zwei Bereiche des Schaufelblattes als besonders kritisch hinsichtlich der thermischen Belastung erwiesen. Dies ist einerseits die Vorderkante des Schaufelblattes aufgrund der Staupunktswirkung der Heissgasanströmung, und die Hinterkante des Schaufelblattes aufgrund der geringen Materialdicke. Zur Verbesserung der Kühlwirkung wird daher häufig die Ausblasung von Kühlmittel an der Hinterkante und im Bereich der Profilvorderkante angewendet. Nachteilig ist dabei einerseits der Kühlmittelverbrauch, wobei das Kühlmittel auch bei hinreichend hohem Druck bereitgestellt werden muss. Andererseits beeinflusst die Kühlmittelausströmung die Aerodynamik des Schaufelblattes.

Rein konvektiv gekühlte Schaufelblätter bieten in dieser Hinsicht Vorteile, und bieten darüber hinaus noch grössere Freiheit bei der Wahl des Kühlmittels. Andererseits ist zur Erzielung einer guten Kühlwirkung für ein entsprechend grosses Temperaturgefälle zwischen dem zu kühlenden Material und dem Kühlmittel Sorge zu tragen. Dabei kann der Massenstrom des Kühlmittels nicht über alle Masse erhöht werden, insbesondere, wenn Verdichterluft als Kühlmittel verwendet wird.

### Darstellung der Erfindung

Hier will die Erfindung Abhilfe schaffen. Aufgabe der vorliegenden Erfindung ist es daher, eine Strömungsmaschinenschaufel und ein Verfahren der eingangs genannten Art anzugeben, mit welchen die Nachteile des Standes der Technik vermieden werden.

Die Erfindung trägt einerseits dazu bei, die Temperatur des Kühlmittels stärker zu vergleichmässigen. Gemäss einer Ausführungsform trägt die Erfindung dafür Sorge, im Bereich der Hinterkante wie auch der Vorderkante des Schaufelblattes möglichst kühles Kühlmedium zur Verfügung zu stellen, um damit diese besonders belasteten Bereiche bevorzugt zu kühlen. Weiterhin trägt die Erfindung dazu bei, das Kühlmittel besonders effizient und bedarfsangepasst zu nutzen.

Dies wird mit einer Strömungsmaschinenschaufel erreicht, welche die Gesamtheit der Merkmale des Anspruchs 1 aufweist, und durch ein Verfahren gemäss dem unabhängigen Verfahrensanspruch.

Kern der Erfindung ist es also, innerhalb des Schaufelblattes der Turbomaschinenschaufel wenigstens zwei hinsichtlich der Kühlmittelströmung parallel angeordnete Durchströmungswege anzuordnen, welche jeweils eine eigene Kühlmittelzuführung aufweisen. Es werden demnach wenigstens zwei Kühlmittelströme unabhängig voneinander durch das Innere des Schaufelblattes geleitet. Damit können zwei Kühlmittelströmungswege mit frischem Kühlmittel angeströmt werden. Bevorzugt werden die unmittelbar mit Kühlmittel, bevorzugt Kühlluft, angeströmten Durchströmungskanäle unmittelbar angrenzend zur Vorderkante und zur Hinterkante des Schaufelblattes angeordnet. Damit wird ein frisch zuströmender Kühlmittelstrom unmittelbar angrenzend zur Schaufelblatt-Vorderkante im Inneren des Schaufelblattes geführt, und/oder ein frisch zuströmender Kühlmittelstrom wird unmittelbar angrenzend zur Schaufelblatt-Hinterkante im Inneren des Schaufelblattes geführt. Damit wird sichergestellt, dass die Durchströmungskanäle im Bereich der am stärksten durch die thermische Belastung gefährdeten Bereiche des Schaufelblattes jeweils mit frischem, noch nicht erwärmtem Kühlmittel angeströmt werden, derart, dass sich dort eine beste Kühlwirkung entfaltet.

Gemäss einer bevorzugten Ausführungsform münden die Zuströmöffnungen von wenigstens zwei Durchströmungskanälen in einer gemeinsamen Kühlmittelzuführung, welche bevorzugt im oder am Schaufelfuss angeordnet ist. Gemäss einer Ausführungsform der Erfindung wird wenigstens ein Kühlmittelstrom, bevorzugt alle Kühlmittelströme, auf der Seite des Schaufelfusses eingebracht.

Weiterhin ist die Erfindung zur Anwendung in Verbindung mit einer rein konvektiv gekühlten Schaufel geeignet, bei der kein Kühlmittel durch Kühlöffnungen auf die Aussenseite des Schaufelblattes strömt. Demnach weist die erfindungsgemässe Strömungsmaschinenschaufel eine bevorzugt im oder am Schaufelkopf angeordnete Kühlmittelabführung auf, mit welcher wenigstens ein Durchströmungsweg, bevorzugt beide Durchströmungswege, eine unmittelbare oder mittelbare Fluidverbindung aufweisen, derart dass wenigstens ein Kühlmittelstrom, bevorzugt beide Kühlmittelströme, vollständig oder teilweise, bevorzugt auf der Seite des Schaufelkopfes, aus dem Schaufelblatt abgeführt werden.

Obschon die Erfindung ganz besonders in Verbindung mit rein konvektionsgekühlten Schaufeln vorteilhafte Wirkungen aufweist, ist sie auch in Verbindung mit nur teilweise konvektionsgekühlten oder vollständig filmgekühlten Schaufeln vorteilhaft anwendbar. Es ist demnach einerseits eine Ausführungsform der Erfindung, dass das Schaufelblatt vollkommen ohne Filmkühlöffnungen auskommt, dass also keine Öffnungen angeordnet sind, durch welche Kühlmittel aus einem Durchströmungskanal heraus auf die Aussenseite des Schaufelblattes geleitet wird. Wenn ein Durchströmungskanal keine Filmkühlöffnungen aufweist, bedeutet dies, dass der Kühlmittelstrom gesamthaft durch den gesamten jeweiligen Durchströmungsweg geleitet wird, und der Kühlmittelmassenstrom am Eintritt in den Durchströmungskanal gleich dem Kühlmittelmassenstrom am Austritt ist.

In einer weiteren im Rahmen der Erfindung prinzipiell möglichen Ausführungsform weist wenigstens ein Durchströmungsweg innerhalb des Schaufelblattes keine Fluidverbindung mit der Kühlmittelabführung auf, und weist stattdessen Kühlmittelaustrittsöffnungen auf, durch welche der gesamte jeweilige Kühlmittelmassenstrom aus dem Schaufelblatt heraus und in die umströmende Heissgasströmung hinein geleitet wird.

Gemäss einer anderen Ausführungsform weist ein Durchströmungsweg sowohl eine Fluidverbindung mit der Kühlmittelabführung als auch Austrittsöffnungen auf die Schaufelblatt-Aussenseite auf, derart, dass ein Teil des Kühlmittels über die Kühlmittelabführung abgeleitet wird, und ein anderer Teil in die das Schaufelblatt umströmende Heissgasströmung geführt wird.

Gemäss einer Ausführungsform der Erfindung weist das Schaufelblatt neben einem ersten und einem zweiten Durchströmungskanal wenigstens einen weiteren in Schaufelblatt-Längsrichtung verlaufenden Durchströmungskanal auf. In einer Weiterbildung dieser Ausführungsform münden wenigstens der erste oder der zweite Durchströmungskanal in einem weiteren Durchströmungskanal. Bevorzugt ist ein weiterer Durchströmungskanal zwischen dem ersten und dem zweiten Strömungskanal angeordnet, wobei der erste und der zweite Strömungskanal bevorzugt unmittelbar angrenzend zur Vorderkante und zur Hinterkante des Schaufelblattes innerhalb des Schaufelblattes angeordnet sind. Dies führt zu einer verbesserten Ausnutzung des Kühlmittels, weil zur Vorderkantenkühlung oder zur Hinterkantenkühlung verwendetes Kühlmittel weiterhin zur Kühlung des Schaufelblattes im thermisch weniger anfälligen Profil-Mittelteil des Schaufelblattes, im Bereich grösserer Profildicke, verwendet wird. In einer Ausführungsform des Verfahrens wird wenigstens ein Kühlmittelstrom serpentienartig durch das Schaufelblatt geleitet.

In einer Ausführungsform der Erfindung wird Luft als Kühlmittel verwendet. Bei der Verwendung des erfindungsgemässen Schaufelblattes in einer Gasturbogruppe findet insbesondere vom Verdichter verdichtete und gegebenenfalls gekühlte Luft als Kühlmittel Verwendung. Ebenso kann Dampf oder ein anderes geeignetes Kühlmittel Verwendung finden, sofern dieses zur Verfügung steht. Insbesondere wenn das Schaufelblatt wie beschrieben rein konvektiv gekühlt wird, besteht eine grosse Freiheit bei der Auswahl des Kühlmittels, und es lassen sich geschlossene Kühlmittelkreisläufe realisieren.

Wie oben dargelegt wurde, entfaltet die Erfindung in Verbindung mit rein konvektionsgekühlten Schaufelblättern ganz besonders vorteilhafte Wirkungen, wenngleich eine Kombination von Konvektionskühlung und Filmkühlung oder sogenannter "Showerhead-Kühlung" oder Hinterkantenausblasung von Kühlmittel nicht gegen die Anwendung der Erfindung spricht.

### Kurze Beschreibung der Zeichnung

Die Erfindung wird nachfolgend anhand eines in der Zeichnung illustrierten Ausführungsbeispiels näher erläutert. Im einzelnen zeigen
Figur 1 eine stark vereinfachte Darstellung einer Gasturbogruppe;
Figur 2 einen Längsschnitt durch eine erfindungsgemäss ausgeführte Strömungsmaschinenschaufel;
Figur 3 einen Querschnitt durch das Schaufelblatt der in Figur 2 dargestellten Schaufel.

Die Zeichnung ist stark vereinfacht; nicht wesentliche Einzelheiten sind Im Sinne einer besseren Übersichtlichkeit weggelassen worden. Das Ausführungsbeispiel und die Zeichnung dienen dem besseren Verständnis der Erfindung, und sollen nicht zu einer Einschränkung der in den Ansprüchen gekennzeichneten Erfindung herangezogen werden.

### Ausführung der Erfindung

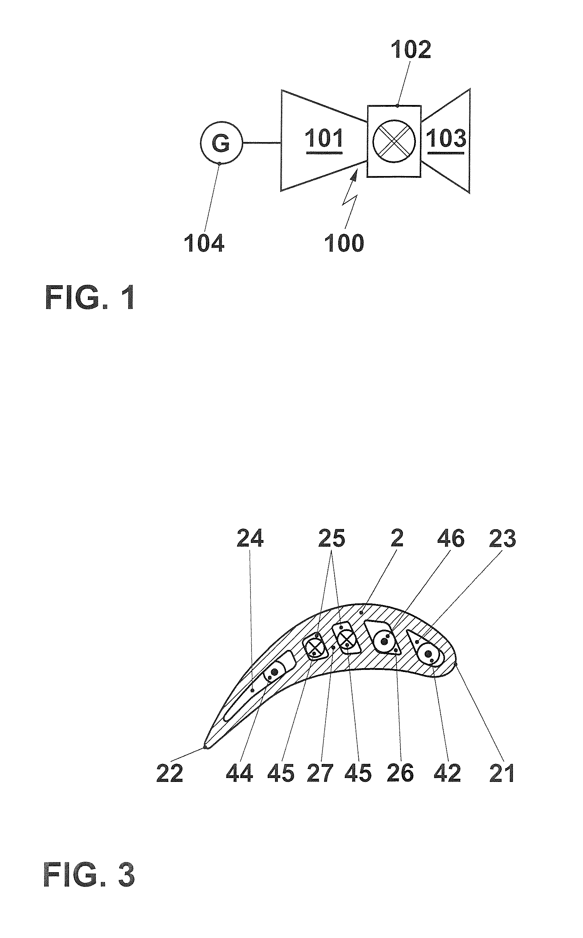

Figur 1 zeigt in einer stark schematisierten Darstellung eine Gasturbogruppe 100, wie sie dem Fachmann geläufig ist, und häufig beispielsweise zur Stromerzeugung oder für stationäre und mobile Antriebe, beispielsweise Flugzeugantriebe, Verwendung findet. Die beispielhaft dargestellte Gasturbogruppe umfasst einen Verdichter 101, in dem Umgebungsluft verdichtet wird, eine Brennkammer 102, in der ein Brennstoff in der verdichteten Luft verbrannt wird, sowie eine Turbine 103 in welcher das in der Brennkammer 102 erzeugte Heissgas arbeitsleistend entspannt wird. Die Turbine 103 treibt den Verdichter 101 sowie einen Leistungsverbraucher 104, beispielsweise einen Generator zur Stromerzeugung, an. Selbstverständlich ist es auch möglich, die Gasturbogruppe mehrwellig, mit mehreren Turbinen und zwischengeordneten Brennkammern, mit mehreren Verdichtern und zwischengeordneten Kühlern, und dergleichen auszuführen. Diese Ausführungsformen sind dem Fachmann geläufig und nicht erfindungsrelevant, weshalb sie an dieser Stelle nicht weiter beschrieben werden.

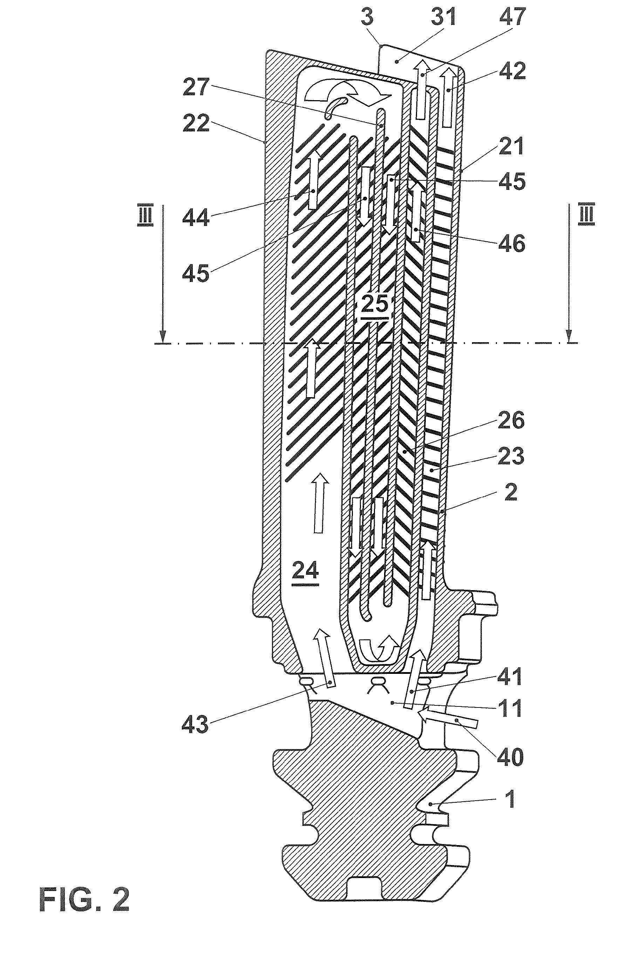

In Figur 2 ist ein Längsschnitt durch eine Schaufel dargestellt, wie sie in der Turbine 103 der Gasturbogruppe 100 Verwendung findet. Die Schaufel umfasst den Schaufelfuss 1, das Schaufelblatt 2, sowie einen Kopfbereich 3. In Figur 3 ist ein Querschnitt durch das Schaufelblatt 2 entlang der mit III - III gekennzeichneten Linie in Blickrichtung vom Schaufelkopf zum Schaufelfuss dargestellt. In Figur 3 ist die Schaufelkontur erkennbar welche von der Schaufelvorderkante zur Schaufelhinterkante von Heissgas umströmt wird. Aufgrund der hohen Heissgastemperaturen ist wenigstens ein Teil der Schaufeln in der Turbine 103 gekühlt ausgeführt. Die dargestellte Schaufel ist rein konvektiv gekühlt, das heisst, es wird kein Kühlmittel auf die Aussenkontur des Schaufelblattes aufgebracht. Im Schaufelfuss ist eine Kühlmittelzuführung 11 angeordnet, zu welcher im Betrieb der Gasturbogruppe Kühlmittel 40 aus einem nicht dargestellten, dem Fachmann aber an sich geläufigen Kühlsystem zuströmt. Am Schaufelkopf 3 ist eine Kühlmittelabführung 31 angeordnet. Das Schaufelblatt 2 erstreckt sich in einer Längsrichtung zwischen dem Schaufelfuss und dem Schaufelkopf. Zu Kühlzwecken ist das Schaufelblatt 2 mit Hohlräumen ausgeführt, die Durchströmungskanäle für das Kühlmittel bilden. Weiterhin sind an den Wänden der Kanäle nicht mit Bezugszeichen versehene Rippen angeordnet, welche durch eine Anregung wandnaher Turbulenz den Wärmeübergang zwischen der Wand und der Kühlmittelströmung intensivieren. Ein erster Durchströmungskanal 23 ist im Schaufelinneren entlang der Vorderkante 21 des Schaufelblattes angeordnet, und verläuft in Schaufelblatt-Längsrichtung. Der erste Durchströmungskanal weist eine Zuströmöffnung auf, welche unmittelbar in der Kühlmittelzuführung 11 mündet, und über welche frisches Kühlmittel 41 in den Durchströmkanal einströmt. Am Schaufelkopf mündet der erste Durchströmungskanal 23 unmittelbar in die Kühlmittelabführung 31, derart, dass erwärmtes Kühlmittel 42 aus dem ersten Durchströmungskanal 23 in die Kühlmittelabführung abströmt. Auf diese Weise wird der entlang der Vorderkante verlaufende Durchströmungskanal unmittelbar mit frischem Kühlmittel angeströmt, derart, dass hier eine beste Kühlwirkung erzielt wird. Ein zweiter Durchströmungskanal 24 ist im Schaufelblattinneren entlang der Schaufelblatt-Hinterkante 22 angeordnet, und verläuft ebenfalls in Schaufel-Längsrichtung. Der zweite Durchströmkanal weist ebenfalls eine Zuströmöffnung auf, welche unmittelbar in der Kühlmittelzuführung 11 mündet, und über welches zur Kühlung der Schaufelblatthinterkante ebenfalls frisches Kühlmittel 43 in den zweiten Durchströmungskanal 24 einzuströmen vermag. Am stromabwärtigen, dem Schaufelkopf zugewendeten Ende mündet der zweite Durchströmungskanal 24 mit einer Strömungsumlenkung in einem weiteren Durchströmungskanal 25, über den die bereits durch die Kühlung des Hinterkantenbereiches erwärmte Kühlmittelströmung 45 wieder vom Schaufelkopfbereich zum Schaufelfussbereich des Schaufelblattes geleitet wird, wo der Kühlmittelstrom in einer eine weiteren Strömungsumlenkung in einen weiteren Durchströmungskanal 26 umgeleitet wird, in dem eine Strömung 46 wieder in Richtung Schaufelkopf weist. Das erwärmte Kühlmittel 47 strömt an der Abströmöffnung des Durchströmungskanals 26 in die Kühlmittelabführung 31 ab. Der zweite Kühlkanal 24 steht in mittelbarer Fluidverbindung mit der Kühlmittelabführung. Die Durchströmungskanäle 25 und 26 verlaufen ebenfalls im Wesentlichen in Richtung der Schaufelblatt-Längsrichtung. Im Strömungskanal 25 ist ein Trennsteg 27 angeordnet, der den Kanal 25 in zwei parallel verlaufende Teilkanäle unterteilt; dieses Detail ist interessant, aber für die Erfindung ohne Bedeutung. Die Durchströmungskanäle 24, 25 und 26 bilden einen serpentinenartigen Strömungsweg, auf dem ein Kühlmittelstrom durch das Schaufelblatt geführt wird. Bei der dargestellten Schaufel sind der erste und zweite Durchströmungskanal unmittelbar an der Schaufelblatt-Vorderkante und der Schaufelblatt-Hinterkante angeordnet und sind unmittelbar mit der Kühlmittelzuführung verbunden. Auf diese Weise werden die besonders gefährdeten Bereiche des Schaufelprofils mit noch vollkommen unverbrauchtem Kühlmittel gekühlt, wodurch der maximale Kühleffekt sichergestellt wird. Die weiteren Strömungskanäle 25 und 26 sind zwischen dem ersten und dem zweiten Durchströmungskanal angeordnet, und liegen damit in Bereichen des Schaufelprofils, wo einerseits keine Staupunktswirkung vorliegt, und zum anderen eine vergleichsweise grosse Profildicke vorliegt. Damit ist die thermische Gefährdung insgesamt geringer als in dem Bereichen der Vorderkante und der Hinterkante. Damit ist eine geringere Kühlwirkung tolerierbar, und die Kanäle 25 und 26 werden mit Kühlmittel angeströmt, welches bereits zur Hinterkantenkühlung benutzt und damit aufgeheizt wurde. Durch diese bedarfangepasste Verwendung des Kühlmittels wird der zweite Kühlmittelstrom 43, 44, 45, 46, 47 bestmöglich ausgenutzt.

Die oben beispielhaft beschriebene Strömungsmaschinenschaufel ist eine rein konvektionsgekühlte Schaufel, bei der der gesamte Kühlmittelmassenstrom über die Kühlmittelabführung im Bereich des Schaufelkopfes abströmt. Wie für den Fachmann ohne Weiteres ersichtlich ist, sind im Rahmen der beanspruchten Erfindung zahlreiche Modifikationen möglich. Insbesondere können auch in Verbindung mit einem oder mehreren Durchströmungskanälen Kühlmittelaustrittsöffnungen angeordnet sein, über welche ein Teil des Kühlmittels auf die Schaufelblattaussenseite abströmt.

### Bezugszeichenliste

- 1: Schaufelfuss
- 2: Schaufelblatt
- 3: Schaufelkopf
- 11: Kühlmittelzuführung
- 21: Schaufelblatt-Vorderkante
- 22: Schaufelblatt-Hinterkante
- 23: erster Durchströmungskanal
- 24: zweiter Durchströmungskanal
- 25: weiterer Durchströmungskanal
- 26: weiterer Durchströmungskanal
- 27: Trennsteg
- 31: Kühlmittelabführung
- 40: Kühlmittelzustrom
- 41: Kühlmittelzustrom, erster Kühlmittelstrom
- 42: aufgeheizter erster Kühlmittelstrom
- 43: Kühlmittelzustrom, zweiter Kühlmittelstrom
- 44: Kühlmittelstrom
- 45: erwärmter zweiter Kühlmittelstrom
- 46: erwärmter zweiter Kühlmittelstrom
- 47: erwärmter zweiter Kühlmittelstrom
- 100: Gasturbogruppe
- 101: Verdichter
- 102: Brennkammer
- 103: Turbine
- 104: Generator

## Patentansprüche

1. Strömungsmaschinenschaufel, insbesondere für eine Gasturbine, umfassend einen Schaufelfuss (1) mit einer Kühlmittelzuführung (11), einen Schaufelkopf (3) mit einer Kühlmittelabführung (31), sowie ein sich zwischen dem Schaufelfuss (1) und dem Schaufelkopf (3) mit einer Längsrichtung erstreckenden Schaufelblatt (2), welches Schaufelblatt eine Schaufelblatt-Vorderkante (21) und eine Schaufelblatt-Hinterkante (22) aufweist, und wobei innerhalb des Schaufelblattes wenigstens zwei sich in Längsrichtung erstreckende Durchströmungskanäle (23, 24) angeordnet sind, **dadurch gekennzeichnet, dass** der erste Durchströmungskanal (23) und der zweite Durchströmungskanal (24) jeweils eine eigene Zuströmöffnung aus der Kühlmittelzuführung (11) aufweisen.

2. Strömungsmaschinenschaufel gemäss Anspruch 1, **dadurch gekennzeichnet, dass** die Zuströmöffnungen des ersten und des zweiten Durchströmungskanals jeweils unmittelbar in einer gemeinsamen Kühlmittelzuführung münden.

3. Strömungsmaschinenschaufel gemäss einem der vorstehenden Ansprüche,
**dadurch gekennzeichnet, dass** der erste Durchströmungskanal (23) unmittelbar angrenzend an die Schaufelblatt-Vorderkante (21) verläuft.

4. Strömungsmaschinenschaufel nach einem der vorstehenden Ansprüche,
**dadurch gekennzeichnet, dass** der zweite Durchströmungskanal (24) unmittelbar angrenzend an die Schaufelblatt-Hinterkante (22) verläuft.

5. Strömungsmaschinenschaufel gemäss einem der vorstehenden Ansprüche, umfassend wenigstens einen weiteren Durchströmungskanal (25, 26).

6. Strömungsmaschinenschaufel gemäss Anspruch 5, **dadurch gekennzeichnet, dass** der weitere Durchströmungskanal im Wesentlichen in Schaufelblatt-Längsrichtung verläuft.

7. Strömungsmaschinenschaufel gemäss einem der Ansprüche 5 oder 6,
**dadurch gekennzeichnet, dass** wenigstens der erste oder der zweite Durchströmungskanal in einen weiteren Durchströmungskanal mündet.

8. Strömungsmaschinenschaufel gemäss einem der vorstehenden Ansprüche,
**dadurch gekennzeichnet, dass** wenigstens ein Durchströmungskanal eine Fluidverbindung mit der Kühlmittelabführung aufweist.

9. Strömungsmaschinenschaufel gemäss Anspruch 8, **dadurch gekennzeichnet, dass** wenigstens der erste Durchströmungskanal (23) oder der zweite Durchströmungskanal (24) unmittelbar in der Kühlmittelabführung (31) mündet.

10. Strömungsmaschinenschaufel gemäss einem der Ansprüche 5 bis 9, umfassend den ersten Durchströmungskanal (23), den zweiten Durchströmungskanal (24), sowie einen dritten Durchströmungskanal (25) und einen vierten Durchströmungskanal (26), wobei der erste Durchströmungskanal (23) unmittelbar angrenzend zur Schaufelblatt-Vorderkante (21) verläuft, der zweite Durchströmungskanal (24) unmittelbar angrenzend zur Schaufelblatt-Hinterkante (22) verläuft, und der dritte Durchströmungskanal und der vierte Durchströmungskanal zwischen dem ersten und dem zweiten Durchströmungskanal angeordnet sind, wobei weiterhin der dritte Durchströmungskanal zwischen dem zweiten und dem vierten Durchströmungskanal angeordnet ist und der vierte Durchströmungskanal zwischen dem dritten und dem ersten Durchströmungskanal angeordnet ist,
**dadurch gekennzeichnet, dass** der erste Durchströmungskanal (23) an einem ersten Ende in der Kühlmittelzuführung (11) und an einem zweiten Ende in der Kühlmittelabführung (31) mündet,
dass der zweite Durchströmungskanal (24) an einem ersten Ende in der Kühlmittelzuführung (11) und an einem zweiten Ende in dem dritten Durchströmungskanal (25) mündet,
dass der dritte Durchströmungskanal (25) an einem ersten Ende in dem zweiten Durchströmungskanal (24) und an einem zweiten Ende in dem vierten Durchströmungskanal (26) mündet,
und, dass der vierte Durchströmungskanal (26) an einem ersten Ende in dem dritten Durchströmungskanal (25) und an einem zweiten Ende in der Kühlmittelabführung (31) mündet.

11. Strömungsmaschinenschaufel gemäss einem der vorstehenden Ansprüche, welche eine rein konvektionsgekühlte Schaufel ist.

12. Gasturbogruppe (100) mit wenigstens einer Strömungsmaschinenschaufel gemäss einem der vorstehenden Ansprüche.

13. Verfahren zur Kühlung einer Strömungsmaschinenschaufel, insbesondere einer Gasturbinenschaufel, umfassend, wenigstens zwei Kühlmittelströme (41, 43) auf innerhalb des Schaufelblattes (2) voneinander getrennten Durchströmungswegen durch das Innere des Schaufelblattes zu leiten.

14. Verfahren gemäss Anspruch 13, **gekennzeichnet dadurch**, wenigstens einen Kühlmittelstrom, bevorzugt alle Kühlmittelströme, gesamthaft durch den gesamten jeweiligen Durchströmungsweg zu leiten, derart, dass der Kühlmittelmassenstrom am Eintritt gleich dem Kühlmittelmassenstrom am Austritt aus dem jeweiligen Durchströmungsweg ist.

15. Verfahren gemäss einem der Ansprüche 13 oder 14, **gekennzeichnet dadurch**, wenigstens einen frisch zuströmenden Kühlmittelstrom (41) im Inneren des Schaufelblattes (2) entlang der Schaufelblatt-Vorderkante (21) zu führen.

16. Verfahren gemäss einem der Ansprüche 13 bis 15, **gekennzeichnet dadurch**, wenigstens einen frisch zuströmenden Kühlmittelstrom (43) im Inneren des Schaufelblattes (2) entlang der Schaufelblatt-Hinterkante (22) zu führen.

17. Verfahren gemäss einem der Ansprüche 13 bis 16, **gekennzeichnet dadurch**, wenigstens einen der Kühlmittelströme (41, 43), bevorzugt alle Kühlmittelströme, auf der Seite des Schaufelfusses (1) in das Schaufelblatt (2) einzubringen.

18. Verfahren gemäss einem der Ansprüche 13 bis 17, **gekennzeichnet dadurch**, wenigstens einen Kühlmittelstrom (41, 43), bevorzugt alle Kühlmittelströme, auf des Seite des Schaufelkopfes (3) aus dem Schaufelblatt (2) abzuführen.

19. Verfahren gemäss einem der Ansprüche 13 bis 18, **gekennzeichnet dadurch**, wenigstens einen Kühlmittelstrom in einem serpentinenartigen Durchströmungsweg durch das Schaufelblatt zu leiten.

20. Verfahren gemäss einem der Ansprüche 13 bis 19, umfassend, einen Kühlmittelmassenstrom (40) zum Schaufelfuss (1) der Strömungsmaschinenschaufel zu leiten, einen ersten Kühlmittel-Teilmassenstrom (41) an einem fussseitigen Ende des Schaufelblattes (2) in das Schaufelblatt einzuleiten, den ersten Teilmassenstrom im Inneren des Schaufelblattes entlang der Schaufelblatt-Vorderkante (21) zu einem kopfseitigen Ende des Schaufelblattes zu führen, und den ersten Teilmassenstrom am kopfseitigen Ende aus dem Schaufelblattinneren herauszuführen, und, einen zweiten Kühlmittel-Teilmassenstrom (43) am fussseitigen Ende des Schaufelblattes in das Schaufelblatt einzuleiten, den zweiten Teilmassenstrom im Inneren des Schaufelblattes entlang der Schaufelblatt-Hinterkante (22) zum kopfseitigen Ende des Schaufelblattes zu führen, den zweiten Teilmassenstrom am kopfseitigen Ende des Schaufelblattes umzulenken und innerhalb des Schaufelblattes zum fussseitigen Ende des Schaufelblattes zu führen, den zweiten Teilmassenstrom ein zweites Mal umzulenken, den zweiten Teilmassenstrom im Inneren des Schaufelblattes zum kopfseitigen Ende des Schaufelblattes zu führen, und den zweiten Teilmassenstrom am kopfseitigen Ende des Schaufelblattes aus dem Schaufelblattinneren herauszuführen.

21. Verfahren gemäss einem der Ansprüche 13 bis 20, **gekennzeichnet dadurch**, das Schaufelblatt ausschliesslich konvektiv zu kühlen.

22. Anwendung eines Verfahrens gemäss einem der Ansprüche 13 bis 21 zur Kühlung einer Schaufel einer Gasturbogruppe.
